**Europäisches Patentamt**

**European Patent Office**

**Office européen des brevets**

(11) Veröffentlichungsnummer: **0 151 466**

**A2**

(12) # EUROPÄISCHE PATENTANMELDUNG

(21) Anmeldenummer: **85100968.8**

(22) Anmeldetag: **31.01.85**

(51) Int. Cl.⁴: **G 03 B 21/11**

(30) Priorität: **08.02.84 DE 3404285**

(43) Veröffentlichungstag der Anmeldung:
**14.08.85 Patentblatt 85/33**

(84) Benannte Vertragsstaaten:
**BE FR GB IT**

(71) Anmelder: **AGFA-GEVAERT Aktiengesellschaft**

**D-5090 Leverkusen 1(DE)**

(72) Erfinder: **Hofmann, Wilfried, Dipl.-Ing.**
**Am Heimgarten 57**
**D-8028 Taufkirchen(DE)**

(72) Erfinder: **Holzmann, Andreas, Ing. grad.**
**Landshuter Strasse 12**
**D-8301 Bruckberg(DE)**

(72) Erfinder: **Lusch, Herbert**
**Rotdornweg 24**
**D-8028 Taufkirchen(DE)**

(72) Erfinder: **Rauffer, Walter, Dipl.-Ing.**
**Obere Seeleite 10**
**D-8031 Steinebach(DE)**

(72) Erfinder: **Sylla, Jürgen, Dipl.-Ing.**
**Amselweg 18**
**D-8029 Sauerlach-Arget(DE)**

(72) Erfinder: **Meggendorfer, Ruth**
**Grünauer Allee 33**
**D-8025 Unterhaching(DE)**

(72) Erfinder: **Koopmann, Alfred**
**Endorferstrasse 7**
**D-8000 München 90(DE)**

(54) **Mikrofiche-Lesegerät für die Verwendung von Mikrofiche-Magazinen.**

(57) Ein Mikrofiche-Lesegerät mit einem Unterteil, mit einer in zwei Koordinatenrichtungen verschiebbaren Mikrofichebühne und mit einer Gerätehaube, in der ein im Gebrauchszustand der Bühne zugewandtes, vorzugsweise schwimmend darauf aufliegendes Objektiv sowie mindestens ein Umlenkspiegel und ein Bildschirm angeordnet sind, für die Verwendung von jeweils mehrere Mikrofiche enthaltenden Mikrofiche-Magazinen ist so ausgebildet, daß im Unterteil (1) hinter dem Verschiebebereich der Bühne (11a, 11b) ein von außen zugänglicher Magazinraum (1a) für ein Magazin (8) vorgesehen ist und daß eine Auswahlvorrichtung (6, 9, 15; 6, 9, 24, 25, 26) zum Auswählen eines Fiches (7) in einem in den Magazinraum (1a) eingesetzten Magazin (8) und Transportmittel (15, 17, 18; 26, 17, 18) zum Bewegen eines ausgewählten Fiches (7) in die Bühne (11a, 11b) und zurück in das Magazin (8) im Unterteil (1) und/oder in der Haube (2) angeordnet sind. Hierdurch ist es möglich, ein Lesegerät für Mikrofiche-Magazine so kompakt auszubilden, daß es als Tischgerät noch ausreichend Arbeitsfläche auf einem Tisch frei läßt.

./...

FIG. 4

AGFA-GEVAERT
Aktiengesellschaft

Patentabteilung

- 1 -

0151466

eh-se

Mikrofiche-Lesegerät für die Verwendung von
Mikrofiche-Magazinen

---

Die Erfindung betrifft ein Mikrofiche-Lesegerät mit einem Unterteil, mit einer in zwei Koordinatenrichtungen verschiebbaren Mikrofichebühne und mit einer Gerätehaube, in der ein im Gebrauchszustand der Bühne zugewandtes, vorzugsweise schwimmend darauf aufliegendes Objektiv sowie mindestens ein Umlenkspiegel und ein Bildschirm angeordnet sind, für die Verwendung von jeweils mehrere Mikrofiche enthaltenden Mikrofiche-Magazinen.

Vorrichtungen zum selbsttätigen Auswählen von Mikrofilmkarten aus einem Kartenmagazin sind bekannt, beispielsweise durch die DE-PS 23 43 671. Diese bekannten sogen. Retrieval-Vorrichtungen müssen neben und/oder unter einem Lesegerät aufgestellt werden, wodurch sich

A-G 1934

0151466

die Arbeitsfläche für eine Auswahl-Lesegerät-Kombination sehr vergrößert und nicht mehr z.B. auf einem Schreib- oder Arbeitstisch neben der Schreib- oder Arbeitsfläche aufstellbar ist.

Der Erfindung liegt die Aufgabe zugrunde, eine Lesegerät-Retrieval-Kombination der eingangs genannten Art so auszubilden, daß diese Kombination keine wesentlich größere Aufstellfläche benötigt als ein Mikrofiche-Lesegerät allein, insbesondere keine oder keine nennenswert größere Aufstellbreite als ein einzelnes Lesegerät.

Diese Aufgabe wird gelöst durch die Merkmale des Hauptanspruchs. Weitere vorteilhafte Merkmale und Ausgestaltungen der Erfindung sind den Unteransprüchen entnehmbar.

Durch die Unterbringung eines Fichemagazins unter der Lesegerätehaube hinter der am weitesten nach hinten verschobenen Stellung der Mikrofichebühne und die entsprechend zugeordnete Anordnung der Retrieval-Vorrichtung konnte ein automatisch arbeitendes Lesegerät mit einer normalen Lesegerätebreite und einer nur geringfügig größeren Tiefe als Lesegeräte für ausschließliche Handbedienung geschaffen werden, weil der hinter der Bühne unter der Haube ohnehin immer vorhandene Raum im Geräteunterteil für die Unterbringung eines Fichemagazins fast ausreichend und nun hierfür mitverwendet worden ist.

Die Erfindung wird anhand von Zeichnungen näher erläutert. Es zeigen

A-G 1934

0151466

Fig. 1 eine schematische Seitenansicht einer Ausgestaltung eines erfindungsgemäßen Lesegerätes
beim Einsetzen eines Magazins,

Fig. 2 das Gerät nach Figur 1 in Gebrauchsstellung,

Fig. 3 eine schematische Darstellung einer für das Gerät nach den Figuren 1 und 2 geeigneten Mikrofiche-Auswahl- und Transportvorrichtung,

Fig. 4 eine perspektivische Darstellung des Lesegerätes nach Figuren 1 bis 3,

Fig. 5 eine gegenüber Figur 1 vergrößerte Ansicht der
Mikrofichebühne nach den Figuren 1 bis 4,

Fig. 6 eine Ansicht einer Ausgestaltung des Magazinraumes nach Figur 4,

Fig. 7 einen Schnitt durch den Magazinraum nach Figur 6 gemäß der Schnittlinie VI-VI,

Fig. 8 eine Seitenansicht einer anderen Ausgestaltung
einer erfindungsgemäßen Ficheauswahl- und
Transporteinrichtung,

Fig. 9 eine Draufsicht auf die Transporteinrichtung
nach Figur 8.

In sämtlichen Figuren sind wirkungsgleiche Teile mit
denselben Bezugsziffern versehen. Dabei sind jeweils
das Unterteil des Mikrofiche-Lesegerätes mit 1, die Ge-

A-G 1934

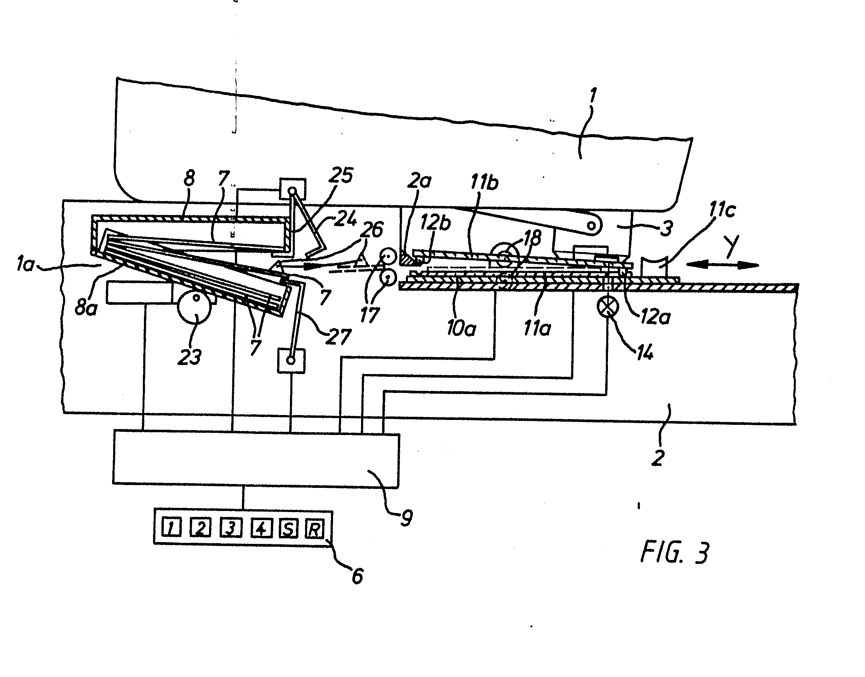

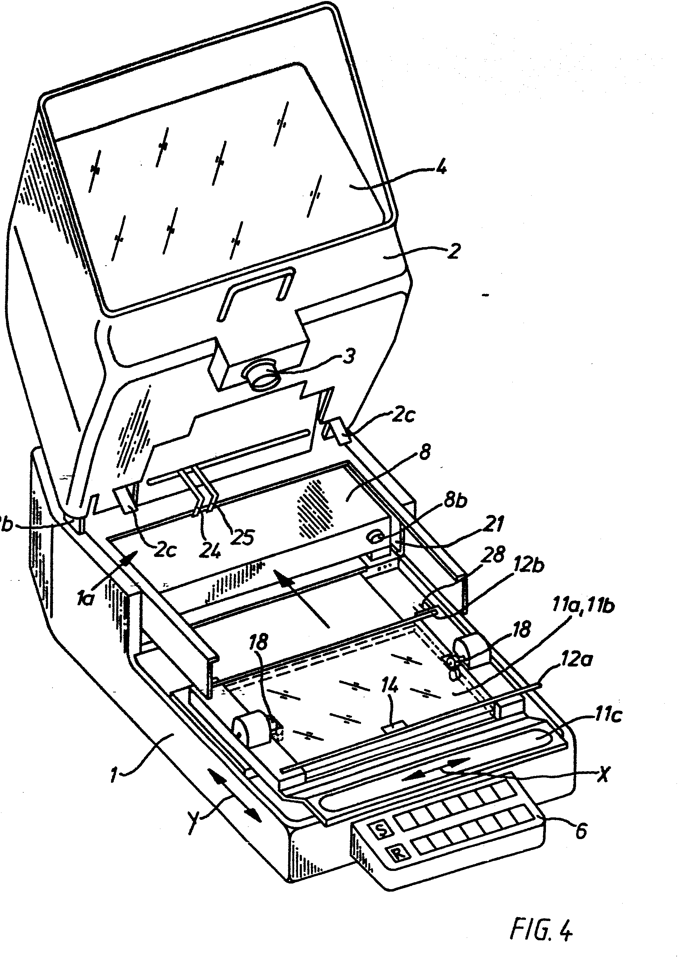

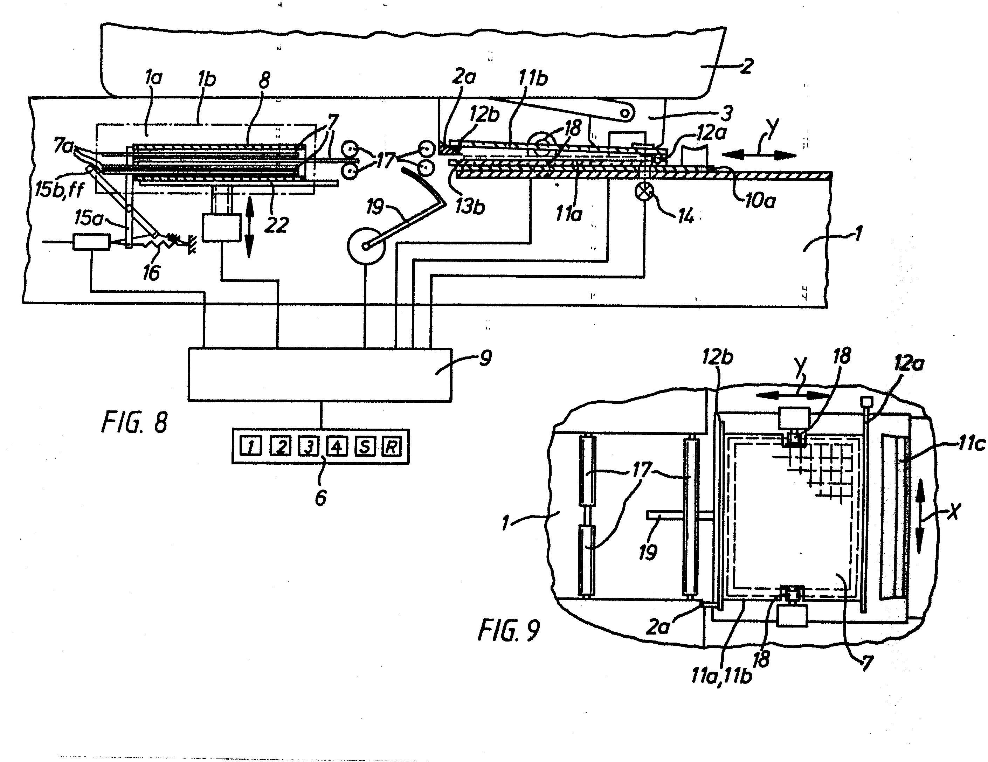

rätehaube mit 2, ein in der Haube 2 schwimmend oder fecernd gelagertes Projektionsobjektiv mit 3 und ein ebenfalls in der Haube 2 angeordneter Bildschirm, vorzugsweise Durchsichtsbildschirm, mit 4, wobei das in der Haube 2 angeordnete, vorzugsweise aus Spiegeln gebildete optische System zwischen Objektiv 3 und Bildschirm 4 bekannt und nicht sichtbar ist, eine im Unterteil 1 angeordnete Beleuchtungsoptik mit 5 und eine stirnseitig aus dem Unterteil 1 vorstehende Auswahltastatur für auszuwählende Mikrofiche 7 mit 6 sowie ein Magazin für die Mikrofiche 7 mit 8 bezeichnet. Die Tastatur 6 ist in den Figuren 3 und 8 nur schematisch zusammen mit einer Auswahl- und Steuerschaltung 9, die nur als Blockschaltung angegeben ist und wofür jede geeignete, bekannte Zähl- und Zeitsteuerschaltung verwendbar ist, unterhalb der Geräteseite gezeichnet, ist aber gemäß Figur 4 an der Stirnseite des Unterteils 1 angeordnet, während die Schaltungselemente samt den nicht dargestellten Antriebsmotoren und/oder Steuermagneten und/oder ähnlichen für derartige Steuerungen bekannten Teilen im Unterteil 1 und/oder teilweise auch in der Haube 2 untergebracht sind.

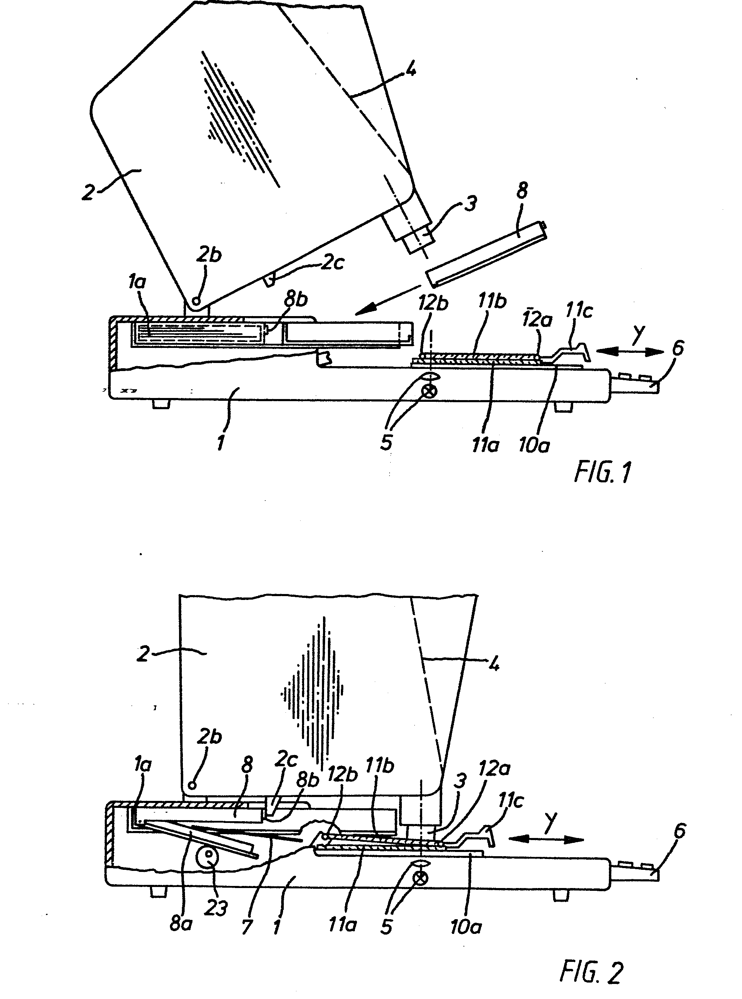

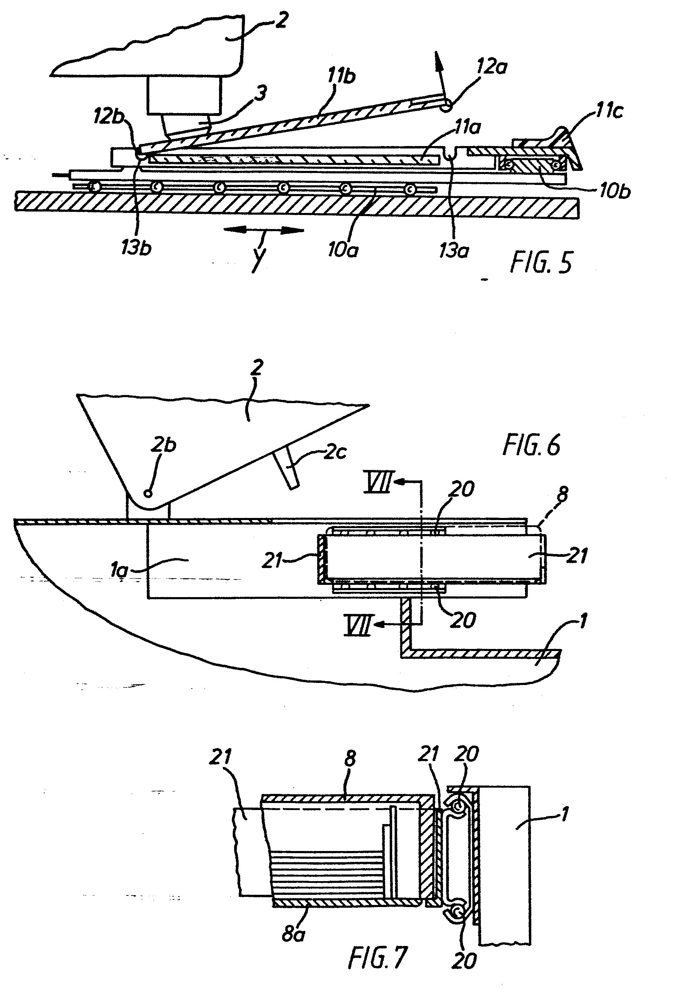

Eine über der Beleuchtungsanordnung 5 und unter dem Objektiv 3 am Unterteil 1 über zwei bekannte, zueinander senkrecht gerichtete Gleit- oder Kugelkäfigführungen 10a, 10b, die nur in Figur 5 detailliert dargestellt sind, in zwei Koordinatenrichtungen X, Y verschiebbare Mikrofichebühne besteht aus zwei Glasplatten 11a, 11b, zwischen die ein Mikrofiche 7 eingelegt wird, und einem Griffstück 11b, das mit der unteren Glasplatte 11a verbunden ist. Die obere Glasplatte 11b trägt an ihren

A-G 1934

0151466

beiden in X-Richtung verlaufenden Seiten zueinander parallele, über die Platte 11b überstehende Achsstäbe 12a, 12b, die gemäß Figur 5 in Rillen 13a, 13b des Rahmens der unteren Glasplatte 11a im geschlossenen Zustand der Bühne 11a, 11b liegen. Zum Einbringen des Mikrofiches 7 in die Bühne wird die obere Glasplatte 11b jeweils an dem überstehenden Teil eines der Achsstäbe 12a bzw. 12b angehoben und unter dem Druck des im Bereich des anderen Achsstabes 12b bzw. 12a federnd aufliegenden Objektivs 3 um letzteren hochgeschwenkt. Das Besondere an dieser Bühne 11a, 11b ist dabei, daß sie sowohl gegen den Benutzer hin aufschwenkbar ist, wie in Figur 5 gezeigt ist, so daß ein Benutzer von Hand von vorn einen Mikrofiche einlegen kann, wenn er will, als auch gegen den hinteren Bereich des Unterteils 1, wie in Figuren 2, 3 und 8 gezeigt ist. Zum automatischen Öffnen der Bühne 11a, 11b gegen den Rückteil des Unterteiles 1 können in der Haube 2 oder dem Unterteil 1 Auflaufschrägflächen 2a im Bewegungsweg der Bühne 11a, 11b nach rückwärts in Y-Richtung angebracht sein, gegen die die überstehenden Teile des hinteren Achsstabes 12b beim Zurückschieben der Bühne über ihren Arbeitsbereich hinaus in Y-Richtung auflaufen, so daß dann die obere Platte 11b bei geschlossener Haube 2 und aufliegendem Objektiv 3 um ihren Achsstab 12a hochgeschwenkt wird. Nun kann ein Mikrofiche 7 vom hinteren Bereich des Unterteils 1 her eingeschoben werden. Selbstverständlich könnte aber eine bekannte, nur aus einer Auflageplatte 11a ohne Abdeckplatte bestehende Mikrofichebühne grundsätzlich auch Verwendung finden, wenn die Mikrofiche 7 in Hüllen angeordnet sind. Dann braucht natürlich keine Anhebevorrichtung 2a für eine obere, nicht

A-G 1934

vorhandene Platte vorhanden zu sein. Außerdem kann in der benutzerseitigen Stirnseite der Bühne 11a, 11b eine Lichtschranke 14 vorgesehen sein, durch die ein Schalter der nachfolgend zu beschreibenden Transporteinrichtung dann ausgeschaltet wird, wenn ein Fiche 7 richtig in der Bildbühne liegt.

Hinter der hintersten, automatisch aufgeschwenkten Stellung der Bühne 11a, 11b ist nun ein Magazinraum 1a im Unterteil 1 vorgesehen, in den jeweils ein Mikrofichemagazin 8, in dem mehrere Mikrofiche 7 übereinanderliegen, einsetzbar und in eine Gebrauchslage bringbar ist. In den Beispielen nach den Figuren 3 und 8 wurde der Einfachheit halber angenommen, in einem Magazin 8 befänden sich nur vier Mikrofiche 7. Gewöhnlich wird es sich aber um zehn bis zwanzig Mikrofiche 7 in einem Magazin 8 handeln. Auf der Tastatur 6 müssen so viele Tasten zum Ansteuern der auszuwählenden Mikrofiche 7 vorhanden sein als in einem Magazin maximal untergebracht sein können.

Bei der Ausgestaltung nach den Figuren 8 und 9, deren Beschreibung der größeren Einfachheit halber vorgezogen wird, ist der Magazinraum 1a durch eine strichpunktiert gezeichnete seitliche Ausnehmung 1b zugänglich, durch die ein vorn und hinten offenes Magazin 8 von der Seite her einsetzbar ist. Die einzelnen Fiche 7 in dem Magazin 8 haben hinten gegeneinander versetzt vorstehende Reiter 7a. Dabei kann im Unterteil 1 ein Taster 15 vorgesehen sein, der mittels Tastatur 6 und Steuerschaltung 9 je nach der Nummer des ausgewählten Fiches 7 bis zu dessen Reiter 7a verschoben und dann nach vorn ge-

A-G 1934

schwenkt wird und dabei den ausgewählten Fiche 7 gegen die geöffnete Bühne 11a, 11b aus dem Magazin 8 schiebt. Es ist aber auch möglich, je Fiche 7 einen Taster 15a, 15b, ff vorzusehen, der durch einen bei der Auswahl angesteuerten, nicht gezeigten Magneten entgegen der Wirkung einer Rückstellfeder 16 gegen den entsprechenden Reiter 7a geschwenkt wird und den ausgewählten Fiche 7 nach vorn aus dem Magazin 8 schiebt. Durch die Steuerschaltung 9 wird auch noch eine Hebebühne 22 bei Auswahl eines Fiches 7 so verstellt, daß der ausgewählte Fiche in der Ebene zwischen den Walzen 17 bei beiden oben beschriebenen Möglichkeiten liegt. Bei den beiden oben beschriebenen Möglichkeiten wird der ausgewählte und vorgeschobene Fiche 7 dann von einem über die Steuerschaltung 9 rechtzeitig eingeschalteten Transportrollenpaar 17 oder mehreren Transportrollenpaaren 17 in die geöffnete Bühne 11a, 11b geschoben. Seitlich der den Mikrofichen 7 entsprechenden Bühnenabmessungen sind in Ausnehmungen der Platten 11a, 11b verschiebbar mit der Bühne zwei achsgleiche Transportrollenpaare 18 vorgesehen, die den Transport des Fiches 7 in die Anlagestellung bis zur Lichtschranke 14 übernehmen und dann abgeschaltet werden. Das dem Magazin 8 benachbarte Rollenpaar 17 ist an einer Stelle unterbrochen, damit hier beim Rücktransport des Fiches 7 aus der Bühne ein weiterer Schubhebel 19 an dem Fiche 7 angreifen und ihn völlig ins Magazin 8 zurückschieben kann. Auf der Tastatur 6 sind außer den den Fichen 7 zugeordneten Auswahltasten noch eine Starttaste S für den Beginn der Auswahl und den Start des Fichetransports und eine Rückholtaste R für die Schaltung des Rücktransports des Fiches 7 aus der Bühne vorgesehen. Nach dem Beladen der

A-G 1934

Bühne mit einem Fiche 7 wird diese in ihre Arbeitsposition geholt, so daß die Platte 11b die Lage nach den Figuren 1, 4 oder 9 einnimmt und dann längs der Führung in beiden Koordinatenrichtungen X, Y je nach Bedarf verschoben werden kann. Zum Zurückführen des Fiches 7 in das Magazin 8 wird die Bühne zuerst in ihre Mittelstellung in X-Richtung gebracht und dann in Y-Richtung wieder in ihre hinterste Stellung geschoben, in der die Auflaufflächen 2a die obere Platte 11b wieder anheben und damit die Bühne öffnen. Dann wird die Rückholtaste R betätigt, wodurch die Rollenpaare 18, 17 in Rückführrichtung gedreht werden und den Fiche 7 zurück zum Magazin führen. Gegen Ende dieser Rückführbewegung wird dann noch die Bewegung des Schubhebels 19 ausgelöst. Befindet sich der zurückgeführte Fiche wieder im Magazin 8, wird der Schubhebel 19 in eine unwirksame Stellung zurückgeführt, ebenso wie nach der Ficheauswahl der betreffende Taster 15 in eine unwirksame Stellung zurückgestellt wird.

Im ganzen gesehen ist die Wirkungsweise dieses Ausführungsbeispiels ähnlich wie die Vorrichtung nach der DE-PS 23 43 671, jedoch mit dem wesentlichen Unterschied, daß Magazin 8, Auswahleinrichtung 6, 9 und Transportvorrichtung 9, 15, 17, 18, 19 äußerst platzsparend im Unterteil 1 untergebracht sind und dadurch eine kompakte, vielseitig verwendbare Retrieval-Lesegeräte-Einheit geschaffen worden ist.

Die Ausführungsform nach den Figuren 1 bis 7 unterscheidet sich von der nach den Figuren 8 und 9 zunächst einmal dadurch, daß die Haube 2 um ein Gelenk 2b am Un-

A-G 1934

0151466

terteil 1 nach oben schwenkbar gelagert ist, wie in den Figuren 1, 4 und 6 gezeigt ist. Der Magazinraum 1a liegt hierbei hinter der Bühne 11a, 11b unter der schwenkbaren Haube 2. Diese muß also zum Einsetzen eines Magazins 8 hochgeschwenkt werden. Im Magazinraum 1a kann ein in einer Gleitführung oder zwei parallelen Kugelkäfigführungen 20 in Y-Richtung verschiebbarer Magazinschlitten 21 gelagert sein, der rahmenartig ausgebildet ist. Zum Einsetzen eines Magazins 8, das einen nach unten zu öffnenden Deckel 8a und eine nicht sichtbare Deckelvorrichtung mit Druckknöpfen 8b aufweist, werden die Bühne 11a, 11b in ihre vordere mittlere Lage geschoben und die Haube 2 hochgeschoben, vgl. Figuren 1 und 4. Dann werden ein Magazin 8 in den Schlitten 21 eingelegt und der Schlitten 21 samt Magazin 8 nach rückwärts in eine Anschlaglage in den Magazinraum 1a geschoben. Beim Schließen der Haube 2 drücken zwei Anschläge 2c der Haube 2 schließlich gegen die Druckknöpfe 8b des Magazins und entriegeln damit dessen Deckel 8a in der völlig heruntergelassenen Haubenstellung. Zwischen den Rahmenteilen des Schlittens 21 liegt im voll eingeschobenen Zustand des Magazins 8 unter diesem eine Hebe-Haltevorrichtung 23, vorzugsweise ein durch die Steuervorrichtung 9 motorisch drehbarer Exzenter 23, der zunächst seine obere Stellung einnimmt und den aufspringenden Magazindeckel 8a noch fest geschlossen hält. Außerdem sind in der Haube 2 wenigstens zwei Tastfinger 24, 25, z.B. durch Magneten schwenkbar gelagert. Als Transportvorrichtung zu den auch bei dieser Ausgestaltung vorhandenen Walzenpaaren 17 sind Sauger 26 vorgesehen. Es könnten statt dessen aber auch an Steuerarmen gelagerte Reibrollen

A-G 1934

0151466

vorgesehen sein, wie bei Papiertransportvorrichtungen
von Druckmaschinen und Kopiergeräten.

Die Wirkungsweise dieses Ausführungsbeispieles ist nun
folgende:

Nach dem Schließen der Haube 2 ist also der Magazinverschluß entriegelt und der Deckel 8a durch den Exzenter 23 noch fest geschlossen gehalten. Nun wird die
Bühne 11a, 11b in ihrer Mittellage in Y-Richtung in ihre hinterste Lage verschoben, wobei durch die Auflaufschrägen 2a die obere Platte 11b rückwärts aufgeklappt
wird. Dann wird der gewünschte Fiche 7 durch Drücken
einer Taste der Tastatur 6 angesteuert und die Starttaste S betätigt. Daraufhin dreht sich der Exzenter 23
infolge der Steuerung durch die Steuerschaltung 9 so
weit, daß die beiden Tastfinger 24, 25 unter- und oberhalb des ausgewählten Fiches 7 einfahren können. Daraufhin wird durch die Steuerschaltung ein weiteres Drehen des Exzenters 23 und Absenken des Deckels 8a mit
den unter dem gewählten Fiche liegenden Fichen bewirkt.
Nun fährt ein weiterer Auflagetaster 27 unter den ausgewählten Fiche, während der unter dem Fiche liegende
Tastfinger 24 ausgefahren wird. Damit ist der ausgewählte Fiche 7 separiert, so daß nun der Sauger 26 oder
eine Reibrolle in das Magazin über dem ausgewählten Fiche einfahren und diesen zu den Transportrollen 17
transportieren kann. Der weitere Vorgang spielt sich
dann wie beim Ausführungsbeispiel nach Figuren 8 und 9
ab. Beim Zurücktransport eines Fiches wird dieser nach
dem letzten Transportrollenpaar 17 wieder von dem Sauger oder der Reibrolle erfaßt und in das Magazin zu-

A-G 1934

rückgeschoben oder -gehoben. Dann fahren der Auflagetaster 27 und der Taster 25 wieder aus dem Magazin aus
und der Exzenter 23 wird wieder in seine obere Stellung
gedreht, so daß er den Deckel 8a in seine geschlossene
Stellung drückt. Zum Wechseln des Magazins wird die
Haube 2 wieder hochgeschwenkt, so daß die Druckknöpfe 8b frei gegeben und das Magazin 8, 8a wieder verriegelt wird.

Selbstverständlich sind noch andere, in den Figuren der
Einfachheit halber nicht gezeigte Ausführungsbeispiele
möglich. So können alle für die Steuerung von Auswahlvorrichtungen und zeitlich nacheinander ablaufenden
Transportvorgängen bekannten elektrischen, elektronischen und/oder mechanischen Vorrichtungen verwendet
werden, wenn sie platzsparend angeordnet werden können.
Auch können alle bekannten Retrieval-Ausgestaltungen
mit horizontal in den Magazinen liegenden Mikrofichen
Verwendung finden, soweit ihre mechanischen Steuer- und
Transportmittel ohne nennenswerte Vergrößerung der Lesegerätebreite und nur eine geringe Vergrößerung der
Länge und Höhe des Unterteils 1 im Unterteil 1 unterbringbar sind. Wie die angeführten Beispiele zeigen,
können für die Einstellung der Höhe des ausgewählten
Mikrofiches in die vorgegebene Bühnen- bzw. Transporthöhe wahlweise Exzenter oder verschiebbare Hebebühnen
Verwendung finden. Auch wäre es möglich, ein Magazin
mit nach oben nach Entriegelung aufspringendem Deckel
und offener Stirnseite zu verwenden, wenn die den einzelnen Fichen 7 zugeordneten Reiter 7a so versetzt vorstehen, daß durch ein den Tastern 24, 25, 26 ähnliches
Tastersystem der ausgewählte Fiche zum Herausziehen

A-G 1934

durch Transportmittel freilegbar ist. Grundsätzlich ist es auch möglich, den Magazinraum von der Rückseite des Gerätes durch eine Einschuböffnung zugänglich zu machen. Bei einer seitlichen oder rückwärtigen Magazineinschuböffnung 1b und Verwendung eines Magazins mit einem Deckel 8a könnte eine von Hand von außen betätigbare Vorrichtung zum Entriegeln des Deckels vorgesehen sein. Ebenso könnte das Anheben der oberen Glasplatte 11b an der Magazinseite durch eine von außen betätigbare Vorrichtung ermöglicht werden. Hierzu bieten sich alle bekannten Exzenter- oder Hebevorrichtungen und ggf. auch magnetisch gesteuerte Druck- oder Anzugsvorrichtungen an. Auch können die Mikrofiche in Hüllen angeordnet oder zwischen ihnen Zwischenblätter mit den Reitern vorgesehen sein. Weiterhin ist es möglich, an der rückwärtigen Bühnenseite einen Schalterteil 28 vorzusehen, der in der geöffneten Bühnenstellung nach Figuren 2 und 8 mit einem Schalterteil im Unterteil 1 einen Hauptschalter schließt.

A-G 1934

Ansprüche

1. Mikrofiche-Lesegerät mit einem Unterteil, mit einer in zwei Koordinatenrichtungen verschiebbaren Mikrofichebühne und mit einer Gerätehaube, in der ein im Gebrauchszustand der Bühne zugewandtes, vorzugsweise schwimmend darauf aufliegendes Objektiv sowie mindestens ein Umlenkspiegel und ein Bildschirm angeordnet sind, für die Verwendung von jeweils mehrere Mikrofiche enthaltenden Mikrofiche-Magazinen, dadurch gekennzeichnet, daß im Unterteil (1) hinter dem Verschiebebereich der Bühne (11a, 11b) ein von außen zugänglicher Magazinraum (1a) für ein Magazin (8) vorgesehen ist und daß eine Auswahlvorrichtung (6, 9, 15; 6, 9, 24, 25, 26) zum Auswählen eines Fiches (7) in einem in den Magazinraum (1a) eingesetzten Magazin (8) und Transportmittel (15, 17, 18; 26, 17, 18) zum Bewegen eines ausgewählten Fiches (7) in die Bühne (11a, 11b) und zurück in das Magazin (8) im Unterteil (1) und/oder in der Haube (2) angeordnet sind.

2. Lesegerät nach Anspruch 1, dadurch gekennzeichnet, daß an einer Längs- oder der Rückseite des Unterteiles (1) eine bis zum Magazinraum (1a) reichende Einschuböffnung (1b) für ein Magazin (8) vorgesehen ist.

A-G 1934

3. Lesegerät nach Anspruch 1, dadurch gekennzeichnet, daß die Haube (2) vom Unterteil (1) weg schwenkbar an diesem gelagert ist und in ihrer aufgeschwenkten Stellung den zumindest teilweise unter ihr gelegenen Magazinraum (1a) frei gibt.

4. Lesegerät nach Anspruch 2 oder 3, dadurch gekennzeichnet, daß im Magazinraum (1a) ein eine Aufnahmeausnehmung für ein Magazin (8) aufweisender Schlitten (21) aus einer Einlegestellung für ein Magazin (8) in eine weiter hinten im Unterteil (1) liegende Gebrauchsstellung für das Magazin (8) verschiebbar gelagert ist.

5. Lesegerät nach einem der vorhergehenden Ansprüche, dadurch gekennzeichnet, daß die Bühne (11a, 11b) aus zwei aus durchsichtigem Material, wie Glas, bestehenden Platten (11a, 11b) besteht, zwischen die ein ausgewählter Fiche (7) einschiebbar ist, und daß die obere Platte (11b) um eine zur Gerätefrontseite parallele und dieser benachbarte Achse (12a) an ihrem dem Magazinraum (1a) benachbarten Ende aufschwenkbar ist.

6. Lesegerät nach Anspruch 5, dadurch gekennzeichnet, daß an der oberen Platte (11b) an der dem Magazinraum (1a) zugewandten Seite mindestens ein vorzugsweise zur Achse (12a) paralleler stab- oder stiftförmiger Vorsprung (12b) angeordnet ist und daß im Unterteil (1) oder der

A-G 1934

Haube (2) mindestens eine Auflauffläche (2a) angebracht ist, die im Verschiebeweg der Bühne (11a, 11b) bzw. des jeweiligen Vorsprungs (12b) über die Lesestellungen hinaus in eine Ladestellung derart liegt, daß die obere Platte (11b) an dem Vorsprung (12b) in die geöffnete Stellung anhebbar ist.

7. Lesegerät nach den Ansprüchen 5 und 6, dadurch gekennzeichnet, daß eine vordere und eine hintere Schwenkachse (12a, 12b) zueinander parallel an der oberen Platte (11b) angeordnet sind, die lose in Vertiefungen (13a, 13b) der Bühne liegen und zugleich überstehende Angriffsteile zum wechselweisen Aufschwenken der oberen Platte (11b) um die jeweils andere Schwenkachse (12b, 12a) bilden.

8. Lesegerät nach Anspruch 1 oder einem anderen der vorhergehenden Ansprüche, dadurch gekennzeichnet, daß die Auswahlvorrichtung eine bekannte Tastatur (6) eine mit dieser gekoppelte elektrische oder elektronische Steuerschaltung (9) und wenigstens einen hierdurch betätigbaren Taster (15; 24 bis 26) aufweist, in dessen oder deren Bewegungsweg wahlweise an den einzelnen Mikrofichen (7) oder deren Hüllen oder deren Zwischenblättern in einem eingesetzten Magazin (8) versetzt zu den anderen Mikrofichen angeordnete Reiter (7a) oder Vorsprünge bringbar sind oder umgekehrt.

A-G 1934

9. Magazin für ein Lesegerät nach Anspruch 8, dadurch gekennzeichnet, daß das Magazin (8) hinten und vorne offen ist und hinten die Reiter (7a) vorstehen.

10. Magazin und Lesegerät nach den Ansprüchen 8 und 9, dadurch gekennzeichnet, daß ein durch Tastatur (6) und Steuerschaltung (9) längs der Reiter (7a) verschieb- und gegen einen dann in seinem Bewegungsweg liegenden Reiter (7a) schwenkbarer und letzteren gegen die offene Magazinvorderseite schiebender Taster (15) vorgesehen ist.

11. Magazin und Lesegerät nach den Ansprüchen 8 und 9, dadurch gekennzeichnet, daß je Mikrofiche-Reiter (7a) ein Taster (15a, 15b, ff) vorgesehen ist und daß durch den jeweils mittels Tastatur (6) und Steuerschaltung (9) betätigbaren Taster der zugeordnete Mikrofiche (7) vorn aus dem Magazin (8) schiebbar ist.

12. Magazin für ein Lesegerät und Lesegerät nach Anspruch 8, dadurch gekennzeichnet, daß das Magazin (8) einen nach oben oder unten aufklappbaren Deckel (8a) mit einer Verriegelungsvorrichtung aufweist und durch die geöffnete Haube (2) in den Magazinraum (1a) einsetzbar ist, und daß an der Haube (2) Vorsprünge (2a) angeordnet sind, in deren Weg beim Herunterklappen der Haube (2) Entriegelungsstücke (8b) für die Verriegelungsvorrichtung angeordnet sind.

A-G 1934

13. Magazin und Lesegerät nach Anspruch 12, dadurch gekennzeichnet, daß der Magazindeckel durch eine im Magazin angeordnete Feder nach Entriegelung der Verriegelungsvorrichtung nach oben anhebbar ist.

14. Magazin und Lesegerät nach Anspruch 12, dadurch gekennzeichnet, daß im Weg des nach Entriegelung nach unten aufspringenden Magazindeckels (8a) ein Nocken (23) zur Begrenzung der Öffnungsbewegung des Deckels (8a) und zum wieder Schließen des Deckels (8a) drehbar, vorzugsweise motorisch antreibbar, im Unterteil (1) angeordnet ist.

15. Magazin und Lesegerät nach einem der Ansprüche 12 bis 14, dadurch gekennzeichnet, daß durch die Tastatur (6) und die Steuerschaltung (9) wenigstens ein Taster (24) längs der vorn im Magazin liegenden Reiter verschiebbar ist und unter dem dem ausgewählten Mikrofiche (7) zugehörigen Reiter eingreifend angeordnet ist.

16. Magazin und Lesegerät nach Anspruch 15, dadurch gekennzeichnet, daß ein weiterer Taster (25) mit dem Taster (24) gekoppelt und verschiebbar über dem unter dem Reiter des gewählten Mikrofiches (7) liegenden Raster (24) eingreifend ausgebildet ist.

17. Magazin und Lesegerät nach den Ansprüchen 13, 15 und 16, dadurch gekennzeichnet, daß die

A-G 1934

- 18 -

0151466

Steuermittel derart vorgesehen sind, daß durch die Taster (24, 25) die über dem ausgewählten Mikrofiche (7) liegenden Fiche in eine höhere und der ausgewählte Mikrofiche in eine Transportebene bewegbar sind.

18. Magazin und Lesegerät nach den Ansprüchen 14 bis 16, dadurch gekennzeichnet, daß Steuermittel derart vorgesehen sind, daß durch die Taster (24, 25) die über dem ausgewählten Mikrofiche liegenden Fiche in einer höheren Ebene und der ausgewählte Mikrofiche in einer Zwischenebene beim Öffnen des Deckels (8a) anhaltbar sind und daß eine Stützvorrichtung (27) unter der Zwischenebene in eine Transportebene einfahrbar und der den ausgewählten Mikrofiche in der Zwischenebene haltende Taster (24) aus dieser ausfahrbar ist.

19. Lesegerät nach Anspruch 1 oder einem anderen der vorhergehenden Ansprüche, dadurch gekennzeichnet, daß die Transportmittel durch in der Transportbahn sich berührende Walzen (17) wenigstens eines Walzenpaares (17) gebildet werden, in die ein ausgewählter Mikrofiche (7) einschiebbar ist.

20. Lesegerät nach Anspruch 19, dadurch gekennzeichnet, daß in den Rändern der Mikrofiche (7) zugeordneten Ausnehmungen der Bühnenplatten (11a, 11b) parallel zu den Schwenkachsen (12a, 12b) der oberen Bühnenplatte (11b)

A-G 1934

0151466

verlaufende, antreibbare Walzenpaare (18) in
der Bühne gelagert sind.

21. Lesegerät nach den Ansprüchen 9 bis 11, dadurch
gekennzeichnet, daß ein ausgewählter Mikrofiche (7) durch den Taster (15) in das erste Walzenpaar (17) einschiebbar ist.

22. Lesegerät nach den Ansprüchen 12 bis 20, dadurch gekennzeichnet, daß eine Saugvorrichtung (26) vorgesehen ist, durch die ein ausgewählter, in der Transportebene liegender Mikrofiche (7) in das erste Walzenpaar (17) schiebbar ist.

23. Lesegerät nach den Ansprüchen 12 bis 18, dadurch gekennzeichnet, daß die Transportmittel durch an sich bekannte Sauger (26) gebildet werden, die in der Transportebene bei geöffnetem Magazin (8, 8a) und angehobener oberer Bühnenplatte (11b) wechselweise in die Magazinöffnung bzw. zwischen die Bühnenplatten eingreifend ausgebildet sind und durch die ein dort befindlicher Mikrofiche (7) in die jeweils andere Lage hebbar oder schiebbar ist.

24. Lesegerät nach den vorhergehenden Ansprüchen, dadurch gekennzeichnet, daß am dem Benutzer zugewandten Rande des Ficheauflagebereiches der Bühnenplatten (11a, 11b) eine an sich bekannte Lichtschranke (14) zur Ein- und Ausschaltung des Schalters für die Transportmittel (18) angeordnet ist.

A-G 1934

0151466

25. Lesegerät nach einem der vorhergehenden Ansprüche, dadurch gekennzeichnet, daß an der Bühne (11b) ein Hauptschalterteil (28) für die Auswahlvorrichtung und die Transportmittel vorgesehen ist, das in der geöffneten hinteren Bühnenstellung mit einem im Unterteil (1) angeordneten zweiten Schalterteil in Kontakt gelangt bzw. steht.

Hierzu 5 Blatt Zeichnungen

A-G 1934

FIG. 1

FIG. 2

A-G 1934

FIG. 3

0151466
3/5

FIG. 4

FIG. 5

FIG. 6

FIG. 7

FIG. 8

FIG. 9